# EUROPÄISCHE PATENTANMELDUNG

(11) **EP 2 420 363 A1**
(43) Veröffentlichungstag der Anmeldung: **22.02.2012**
(21) Anmeldenummer: 11005729.6
(22) Anmeldetag: 13.07.2011
(51) Int. Cl.: B26D 5/34, B26D 7/30, A22C 17/00

(54) **Gleichzeitiges Aufschneiden mehrspurig zugeführter Lebensmittelprodukte**

(30) Priorität: 18.08.2010 DE 102010034674
(71) Anmelder: Weber Maschinenbau GmbH Breidenbach, 35236 Breidenbach (DE)
(72) Erfinder:
(74) Vertreter: Manitz, Finsterwald & Partner GbR

(57) **Zusammenfassung**

Die Erfindung betrifft ein Verfahren zum gleichzeitigen, mehrspurigen Aufschneiden mehrerer Lebensmittelprodukte, insbesondere Lebensmittelprodukte unterschiedlicher Sorte, bei dem die Produkte mit einer gemeinsamen Aufschneidevorrichtung, insbesondere einem Hochleistungs-Slicer, aufgeschnitten werden, die wenigstens ein Schneidmesser aufweist, das in einer Schneidebene um eine Messerachse rotiert und/oder um eine Mittelachse planetarisch umläuft, und die Produkte dem Schneidmesser in Abhängigkeit von Informationen, die zumindest das Innere der Produkte betreffen, individuell zugeführt werden.

## Beschreibung

Die Erfindung betrifft ein Verfahren sowie eine Vorrichtung zum gleichzeitigen, mehrspurigen Aufschneiden mehrerer Lebensmittelprodukte, insbesondere Lebensmittelprodukte unterschiedlicher Sorte.

Das gleichzeitige Aufschneiden mehrerer Lebensmittelprodukte an einer Aufschneidevorrichtung, insbesondere mittels eines einzigen Schneidmessers, ist grundsätzlich bekannt. Hierzu wird beispielsweise auf EP 0 713 753 B1 verwiesen. Das gleichzeitige Aufschneiden von Lebensmittelprodukten wird auch als mehrspuriges Aufschneiden bezeichnet.

Bei einer Aufschneidevorrichtung, die dazu in der Lage ist, mehrere Produkte gleichzeitig aufzuschneiden, können die Produkte dem Schneidmesser gleichzeitig zugeführt werden. Aus bestimmten Gründen ist es erforderlich, dass die Produktzufuhr in den einzelnen Spuren mit unterschiedlichen bzw. unterschiedlich variierenden Einzelgeschwindigkeiten, also individuell, erfolgt. Eine individuelle Regelung der Fördergeschwindigkeiten in den einzelnen Spuren ist beispielsweise erforderlich, wenn die Produkte - in Förderrichtung gesehen - unterschiedliche Gewichtsprofile (bei über das gesamte Produkt konstanter Produktdichte also unterschiedliche Querschnittsprofile) aufweisen, da dann die Dicke der abgetrennten Produktscheiben und somit die Produktzufuhr individuell angepasst werden muss, um für jede Scheibe ein gewünschtes Scheibengewicht oder für jede eine Mehrzahl von Scheiben umfassende Portion ein gewünschtes Portionsgewicht zu erzielen. Eine solche Vorgehensweise ist beispielsweise aus DE 196 04 254B4 sowie aus EP 1 178 878B1 bekannt.

Ebenfalls bekannt ist es, beim Aufschneiden von Lebensmittelprodukten und insbesondere bei der Zufuhr eines Produkts das Produktinnere zu berücksichtigen. Hierzu wird beispielsweise auf DE 44 10 596 A1, DE 103 42 499 B4 sowie DE 10 2005 010 183 A1 verwiesen.

Aufgabe der Erfindung ist es, die Resultate beim gleichzeitigen Aufschneiden mehrerer Lebensmittelprodukte zu verbessern, insbesondere bei den Produktscheiben bzw. Scheibenportionen die Gewichtsgenauigkeit zu erhöhen.

Die Lösung dieser Aufgabe erfolgt durch die Merkmale der unabhängigen Ansprüche 1 und 17.

Bei dem erfindungsgemäßen Verfahren ist insbesondere vorgesehen, dass die Produkte mit einer gemeinsamen Aufschneidevorrichtung, insbesondere einem Hochleistungs-Slicer, aufgeschnitten werden, die wenigstens ein Schneidmesser aufweist, das in einer Schneidebene um eine Messerachse rotiert und/oder um eine Mittelachse planetarisch umläuft, wobei die Produkte dem Schneidmesser in Abhängigkeit von Informationen, die zumindest das Innere der Produkte betreffen, individuell zugeführt werden.

Bei der erfindungsgemäßen Vorrichtung ist insbesondere eine Produktzuführung vorgesehen, die mehrere parallel nebeneinander angeordnete Fördereinrichtungen umfasst, mit denen die Produkte einer Schneidebene mehrspurig zuführbar sind, in der sich wenigstens ein Schneidmesser, insbesondere rotierend und/oder umlaufend bewegt, wobei die Produktzuführung dazu ausgebildet ist, die Produkte dem Schneidmesser in Abhängigkeit von Informationen, die zumindest das Innere der Produkte betreffen, individuell zuzuführen.

Wenn nachstehend von "Informationen" die Rede und nichts anderes erwähnt ist, dann sind damit solche Informationen gemeint, die das Produktinnere betreffende Informationen zumindest umfassen.

Die Erfindung schafft folglich eine Spurindividualisierung unter Berücksichtigung von das Produktinnere betreffenden Informationen, beispielsweise der Dichteverteilung. Die Produktzufuhr in den einzelnen Spuren braucht sich daher nicht auf die äußere Produktkontur, also den Querschnittsverlauf oder das Querschnittsprofil der Produkte, zu beschränken. Erfindungsgemäß kann somit für die individuelle Produktzufuhr ein Maximum an solchen Informationen herangezogen werden, die für ein gewichtsgenaues Aufschneiden der Produkte förderlich sind.

Vorteilhafte Ausgestaltungen der Erfindung sind auch in den abhängigen Ansprüchen, der Beschreibung sowie der Zeichnung angegeben.

Bei dem erfindungsgemäßen Verfahren ist insbesondere vorgesehen, dass in jeder Spur die Produktzufuhr unabhängig von Informationen erfolgt, die Produkte, insbesondere das Innere der Produkte, in den anderen Spuren betreffen. Bezüglich der Nutzung der das Produktinnere betreffenden Informationen kann hierdurch bei der individuellen Produktzufuhr eine vollkommene Unabhängigkeit der einzelnen Spuren voneinander realisiert werden.

Die hier in Rede stehenden Informationen können an oder in der Aufschneidevorrichtung, insbesondere an oder in einer Produktzuführung der Aufschneidevorrichtung, gewonnen werden. Es ist also möglich, die im Folgenden auch einfach als Produktscanner bezeichneten Mittel zur Gewinnung der das Produktinnere betreffenden Informationen in die Aufschneidevorrichtung bzw. die Produktzuführung zu integrieren. Grundsätzlich ist es aber auch möglich, die Informationsgewinnung an einem von der Aufschneidevorrichtung getrennten Ort und/oder zeitlich unabhängig vom Aufschneidevorgang durchzuführen. Es sind dann geeignete Mittel vorzusehen, die eine Zuordnung zwischen Produkt und am Produkt gewonnenen Informationen ermöglichen, damit sichergestellt ist, dass bei der individuellen Produktzufuhr während des Aufschneidevorgangs für die Produkte jeweils die korrekten Informationen berücksichtigt werden. Vorzugsweise werden die Informationen durch eine berührungslose Methode gewonnen, insbesondere unter Verwendung von elektromagnetischer Strahlung.

Die Informationen können dadurch gewonnen werden, dass die Produkte jeweils durchleuchtet und/oder durchstrahlt werden. Bevorzugt ist es, wenn die Informationen unter Verwendung von Röntgenstrahlung gewonnen werden.

Des Weiteren kann erfindungsgemäß vorgesehen sein, dass für jedes Produkt die Informationen in einer Vielzahl von durch das Produkt hindurch verlaufenden Ebenen gewonnen werden, die insbesondere jeweils senkrecht zu einer Produktzuführrichtung verlaufen. Der oder jeder Produktscanner kann somit derart ausgebildet sein, dass jedes Produkt nacheinander in einer Mehrzahl von einzelnen Ebenen abgetastet wird. Beispielsweise kann der Röntgenscanner stationär und derart angeordnet sein, dass die Abtastebene senkrecht zur Produktzuführrichtung verläuft, so dass die Informationsgewinnung derart erfolgt, dass das betreffende Produkt während des Abtastvorgangs durch die Abtastebene hindurch bewegt wird. Die in den einzelnen Ebenen gewonnenen Teilinformationen können dann durch eine geeignete Auswerteeinrichtung zu einem das Produktinnere betreffenden "Gesamtbild" zusammengesetzt werden.

Die Informationen können gewonnen werden, während die Produkte dem Schneidmesser zugeführt werden.

Die individuelle Produktzufuhr kann derart erfolgen, dass die Geschwindigkeiten, mit denen die Produkte dem Schneidmesser zugeführt werden, individuell eingestellt und/oder verändert werden.

Während des Aufschneidevorgangs können die Produkte in den Spuren vollkommen unabhängig voneinander dem Schneidmesser zugeführt werden. Alternativ ist es auch möglich, dass die Produkte in den Spuren dem Schneidmesser derart zugeführt werden, dass mehrere parallel nebeneinander angeordnete Fördereinrichtungen gemeinsam angetrieben und die Einzelgeschwindigkeiten der Fördereinrichtungen individuell verändert werden.

Insbesondere ist vorgesehen, dass in jeder Spur die Produktzufuhr mittels eines eigenen Regelkreises erfolgt. Hierdurch kann zumindest bezüglich der Produktzufuhr und der dabei erfolgenden Berücksichtigung der das Produktinnere betreffenden Informationen eine vollkommene Spurunabhängigkeit erzielt werden.

Bei der erfindungsgemäßen Vorrichtung kann insbesondere vorgesehen sein, dass die Mittel zum Gewinnen der Informationen dazu ausgebildet sind, die Produkte zu durchleuchten und/oder zu durchstrahlen. Insbesondere umfassen die Mittel wenigstens eine Röntgenstrahleinrichtung.

Für alle Spuren und somit alle gleichzeitig aufzuschneidenden Produkte kann ein einziger Produktscanner vorgesehen sein. Alternativ kann jede Spur einen eigenen Produktscanner aufweisen. Auch bei Verwendung eines einzigen, gemeinsamen Produktscanners können Gewinnung und Nutzung der das Produktinnere betreffenden Informationen individuell für die einzelnen Produkte und insbesondere für die Zufuhr der Produkte während des Aufschneidens erfolgen.

Die erfindungsgemäße Vorrichtung ist insbesondere dazu ausgebildet, nach einem Verfahren der hier beschriebenen Art betrieben zu werden.

Die Erfindung wird im Folgenden beispielhaft unter Bezugnahme auf die Zeichnung beschrieben. Es zeigen:
- Fig. 1: schematisch eine Draufsicht auf eine erfindungsgemäße Aufschneidevorrichtung mit einer Produktzuführung gemäß einer ersten Ausführungsform, und
- Fig. 2: eine Ansicht entsprechend Fig. 1 mit einer Produktzuführung gemäß einer zweiten Ausführungsform.

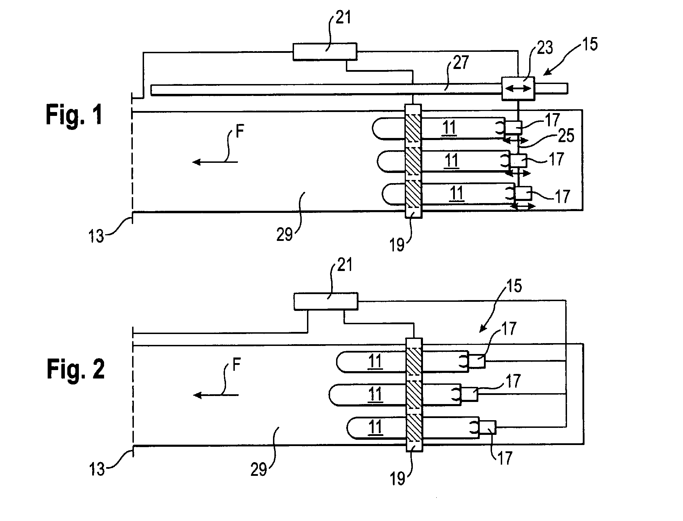

Die Fig. 1 und 2 zeigen jeweils schematisch einen Hochleistungs-Slicer, der dazu ausgebildet ist, gleichzeitig eine Mehrzahl von Lebensmittelprodukten 11 aufzuschneiden. Der Slicer besitzt wenigstens ein hier nicht dargestelltes Schneidmesser, das sich in einer Schneidebene 13 bewegt. Bei dem Schneidmesser kann es sich beispielsweise um ein um eine Messerachse rotierendes Sichelmesser handeln. Alternativ kann der Slicer mit einem Kreismesser versehen sein, das um eine Messerachse rotiert und zusätzlich um eine parallel versetzt zur Messerachse verlaufende Mittelachse planetarisch umläuft.

Eine Produktzuführung 15 dient jeweils dazu, die Produkte 11 dem Schneidmesser bzw. der Schneidebene 13 individuell zuzuführen.

In dem Ausführungsbeispiel der Fig. 1 ist jeder Spur des Slicers bzw. der Produktzuführung 15 und somit jedem der gleichzeitig aufzuschneidenden Produkte 11 eine Fördereinrichtung 17 zugeordnet, bei der es sich um einen so genannten Produkthalter handeln kann, der in das hintere Ende des auf einer Produktauflage 29 der Produktzuführung 15 aufliegenden Produkts 11 eingreift.

Für die einzelnen Fördereinrichtungen 17 ist ein gemeinsamer Antrieb 23 vorgesehen, der einen Träger 25 für die Fördereinrichtungen 17 längs einer parallel zur Förderrichtung F verlaufenden Führung 27 bewegen kann, und zwar sowohl in Förderrichtung F als auch entgegen der Förderrichtung F, wie es durch den Doppelpfeil angedeutet ist.

Wenn der gemeinsame Träger 25 mittels des gemeinsamen Antriebs 23 in Richtung der Schneidebene 13 bewegt wird, werden dabei alle Produkthalter 17 und somit alle Produkte 11 zwangsweise mitgenommen. Zum Aufschneiden der nächsten Produkte werden die Produkthalter 17 wieder in die Ausgangsstellung zurückbewegt. Während des Aufschneidens gibt folglich der gemeinsame Antrieb 23 eine gemeinsame Vorschubgeschwindigkeit für die Produkte 11 vor, die aber für jedes Produkt 11 individuell verändert werden kann, indem während des Aufschneidens die Produkthalter 17 unabhängig voneinander relativ zum Träger 25 bewegt werden, wie es durch die Doppelpfeile an den Produkthaltern 17 angedeutet ist.

Für jedes Produkt 11 kann hierdurch eine Feinabstimmung oder Korrektur der durch den gemeinsamen Antrieb 23 bestimmten gemeinsamen Vorschubgeschwindigkeit erfolgen, um auf diese Weise beispielsweise individuelle Schwankungen des Produktquerschnitts und/oder der Produktdichte über die Produktlänge so auszugleichen, dass die von den Produkten 11 abgetrennten Produktscheiben bzw. daraus gebildete Portionen jeweils ein gewünschtes Gewicht aufweisen. Die beschriebene Ausgestaltung der Produktzuführung 15 ermöglicht es also, über die Produkte 11 gewonnene Informationen, insbesondere Informationen über das Produktinnere, im Sinne einer individuellen Produktzufuhr zu berücksichtigen.

Um Informationen über das Produktinnere zu gewinnen, ist ein gemeinsamer Produktscanner 19 vorgesehen, der sich quer zur Förderrichtung F über alle Spuren hinweg erstreckt. Bei dem Produktscanner 19 handelt es sich insbesondere um eine Röntgenstrahleinrichtung, die dazu dient, Informationen über das Innere der Produkte 11 zu gewinnen, während diese in Förderrichtung F am Produktscanner 19 vorbei bzw. unter dem Produktscanner 19 hindurch bewegt werden. Hierbei definiert der Produktscanner 19 eine senkrecht zur Förderrichtung F verlaufende Abtastebene, durch welche die Produkte 11 während des Scanvorgangs hindurchbewegt werden. Abtastebene für Abtastebene werden hierbei Informationen über das Produktinnere ermittelt, um auf diese Weise insbesondere die Dichteverteilung der einzelnen Produkte 11 in Förderrichtung F zu bestimmen.

Durch die schraffierten Bereiche am gemeinsamen Produktscanner 19 ist angedeutet, dass in einer alternativen Ausgestaltung für jede Spur ein separater Produktscanner 19 angeordnet sein kann.

Die Aufschneidevorrichtung umfasst eine Steuereinheit 21, die mit dem Schneidmesser bzw. dem Antrieb für das Schneidmesser bzw. einem das Schneidmesser umfassenden Messer- oder Schneidkopf verbunden ist. Außerdem ist die Steuereinheit 21 mit der Produktzuführung 15 sowie dem Produktscanner 19 verbunden. Auf diese Weise kann die Steuereinheit 21, die Bestandteil einer übergeordneten zentralen Steuereinrichtung sein kann, die individuelle Produktzufuhr unter Berücksichtigung der mittels des Produktscanners 19 gewonnenen Informationen über das Innere der Produkte 11 besorgen.

Bevorzugt werden bei der individuellen Produktzufuhr außerdem Informationen über die Produktkontur berücksichtigt, also das Querschnittsprofil der Produkte 11 längs der Förderrichtung F, wie es grundsätzlich bekannt ist. Hierzu kann ein separater Produktscanner vorgesehen sein, der die Außenkonturen der Produkte 11 abtastet. Alternativ kann eine solche Abtasteinrichtung in den Produktscanner 19 integriert sein.

In dem Ausführungsbeispiel der Fig. 2 ist die Produktzuführung 15 derart ausgebildet, dass alle Produkte 11 vollkommen unabhängig voneinander zugeführt werden können. Für jede Spur und damit für jedes aufzuschneidende Produkt 11 ist eine wiederum als Produkthalter ausgebildete Fördereinrichtung 17 vorgesehen, die am hinteren Produktende angreift und das betreffende Produkt 11 in Förderrichtung F der Schneidebene 13 zuführt. Für jede Spur und somit für jedes Produkt 11 kann die Zufuhrgeschwindigkeit individuell eingestellt und variiert werden, und zwar jeweils unabhängig von den anderen Spuren. Dabei ist es auch möglich, in jeder Spur die Produktzufuhr vorübergehend zu unterbrechen, d.h. die jeweilige Fördereinrichtung 17 anzuhalten. Hierdurch ist es möglich, bezogen auf das betreffende Produkt, so genannte Leerschnitte durchzuführen, um zu erreichen, dass vorübergehend von dem betreffenden Produkt 11 keine Scheiben abgetrennt werden.

Derartige Leerschnitte sind auch bei dem Konzept der Produktzuführung 15 im Ausführungsbeispiel der Fig. 1 möglich, da dort die einzelnen Fördereinrichtungen 17 unabhängig voneinander relativ zu dem gemeinsamen Träger 25 bewegt werden können. Die vollkommene Unabhängigkeit der Fördereinrichtungen 17 bei dem Konzept der Fig. 2 schafft dort allerdings einen größeren Spielraum bei der individuellen Produktzufuhr.

Ansonsten entspricht das Ausführungsbeispiel der Fig. 2 jenem der Fig. 1, so dass auf die entsprechenden Ausführungen verwiesen werden kann.

### Bezugszeichenliste

- 11: Produkt
- 13: Schneidebene
- 15: Produktzuführung
- 17: Fördereinrichtung, Produkthalter
- 19: Mittel zur Informationsgewinnung, Produktscanner, Röntgenstrahleinrichtung
- 21: Steuereinheit
- 23: gemeinsamer Antrieb
- 25: Träger
- 27: Führung
- 29: Produktauflage
- F: Förderrichtung

## Patentansprüche

1. Verfahren zum gleichzeitigen, mehrspurigen Aufschneiden mehrerer Lebensmittelprodukte (11), insbesondere Lebensmittelprodukte unterschiedlicher Sorte, bei dem
- die Produkte (11) mit einer gemeinsamen Aufschneidevorrichtung, insbesondere einem Hochleistungs-Slicer, aufgeschnitten werden, die wenigstens ein Schneidmesser aufweist, das in einer Schneidebene (13) um eine Messerachse rotiert und/oder um eine Mittelachse planetarisch umläuft, und
- die Produkte (11) dem Schneidmesser in Abhängigkeit von Informationen, die zumindest das Innere der Produkte (11) betreffen, individuell zugeführt werden.

2. Verfahren nach Anspruch 1,
**dadurch gekennzeichnet,**
**dass** in jeder Spur die Produktzufuhr unabhängig von Informationen erfolgt, die Produkte (11) in den anderen Spuren betreffen.

3. Verfahren nach Anspruch 1 oder 2,
**dadurch gekennzeichnet,**
**dass** die Informationen an oder in der Aufschneidevorrichtung, insbesondere an oder in einer Produktzuführung (15) der Aufschneidevorrichtung, gewonnen werden.

4. Verfahren nach einem der vorhergehenden Ansprüche,
**dadurch gekennzeichnet ,**
**dass** die Informationen durch eine berührungslose Methode gewonnen werden, insbesondere unter Verwendung von elektromagnetischer Strahlung.

5. Verfahren nach einem der vorhergehenden Ansprüche,
**dadurch gekennzeichnet,**
**dass** die Informationen dadurch gewonnen werden, dass die Produkte (11) durchleuchtet und/oder durchstrahlt werden, und/oder dass die Informationen unter Verwendung von Röntgenstrahlung gewonnen werden.

6. Verfahren nach einem der vorhergehenden Ansprüche,
**dadurch gekennzeichnet,**
**dass** für jedes Produkt (11) die Informationen in einer Vielzahl von durch das Produkt (11) hindurch verlaufenden Ebenen gewonnen werden, die insbesondere jeweils senkrecht zu einer Produktzuführrichtung (F) verlaufen.

7. Verfahren nach einem der vorhergehenden Ansprüche,
**dadurch gekennzeichnet,**
**dass** die Informationen gewonnen werden, während die Produkte (11) dem Schneidmesser zugeführt werden, und/oder dass für jedes Produkt (11) die Gewinnung der Informationen abgeschlossen wird, bevor mit dem Aufschneiden des Produktes (11) begonnen wird.

8. Verfahren nach einem der vorhergehenden Ansprüche,
**dadurch gekennzeichnet,**
**dass** die Produkte (11) dem Schneidmesser jeweils auch in Abhängigkeit von Informationen, die das Produktgewicht betreffen, zugeführt werden, wobei bevorzugt jedes Produkt (11) gewogen wird, bevor mit dem Aufschneiden des Produktes (11) begonnen wird.

9. Verfahren nach einem der vorhergehenden Ansprüche,
**dadurch gekennzeichnet,**
**dass** die Produkte (11) in jeweils zumindest eine Produktscheibe umfassende Portionen aufgeschnitten werden, und/oder dass die Produkte (11) dem Schneidmesser derart individuell zugeführt werden, dass jede Scheibe und/oder Portion eine für die jeweilige Spur vorgegebene Bedingung erfüllt, die insbesondere das Gewicht der Portion, das Gewicht und/oder die Dicke der, insbesondere die Portion bildenden, Produktscheiben, und/oder die Anzahl der die Portion bildenden Produktscheiben betrifft.

10. Verfahren nach einem der vorhergehenden Ansprüche,
**dadurch gekennzeichnet,**
**dass** die Geschwindigkeiten, mit denen die Produkte (11) dem Schneidmesser zugeführt werden, individuell eingestellt und/oder verändert werden.

11. Verfahren nach einem der vorhergehenden Ansprüche,
**dadurch gekennzeichnet,**
**dass** die Produkte (11) in den Spuren vollkommen unabhängig voneinander dem Schneidmesser zugeführt werden, oder dass die Produkte (11) in den Spuren dem Schneidmesser derart zugeführt werden, dass mehrere parallel nebeneinander angeordnete Fördereinrichtungen (17) gemeinsam angetrieben und die Einzelgeschwindigkeiten der Fördereinrichtungen (17) individuell verändert werden.

12. Verfahren nach einem der vorhergehenden Ansprüche,
**dadurch gekennzeichnet,**
**dass** in jeder Spur die Produktzufuhr mittels eines eigenen Regelkreises erfolgt.

13. Vorrichtung zum gleichzeitigen, mehrspurigen Aufschneiden mehrerer Lebensmittelprodukte (11), insbesondere Lebensmittelprodukte unterschiedlicher Sorte,
- mit einer Produktzuführung (15), die mehrere parallel nebeneinander angeordnete Fördereinrichtungen (17) umfasst, mit denen die Produkte (11) einer Schneidebene (13) mehrspurig zuführbar sind, in der sich wenigstens ein Schneidmesser, insbesondere rotierend und/oder umlaufend, bewegt,
- wobei die Produktzuführung (15) dazu ausgebildet ist, die Produkte (11) dem Schneidmesser in Abhängigkeit von Informationen, die zumindest das Innere der Produkte (11) betreffen, individuell zuzuführen, insbesondere derart, dass in jeder Spur die Produktzufuhr unabhängig von Informationen erfolgt, die Produkte (11) in den anderen Spuren betreffen.

14. Vorrichtung nach Anspruch 13,
**dadurch gekennzeichnet,**
**dass** Mittel (19) zum Gewinnen der Informationen dazu ausgebildet sind, die Produkte (11) zu durchleuchten und/oder zu durchstrahlen, wobei insbesondere die Mittel (19) wenigstens eine Röntgenstrahleinrichtung umfassen.

15. Vorrichtung nach Anspruch 13 oder 14,
**dadurch gekennzeichnet,**
**dass** die Vorrichtung dazu ausgebildet ist, nach einem Verfahren der Ansprüche 1 bis 12 betrieben zu werden.
